# EUROPEAN PATENT APPLICATION

(11) **EP 4 835 767 A1**
(43) Date of publication of application: **04.11.2026**
(21) Application number: 25173288.9
(22) Date of filing: 29.04.2025
(51) Int. Cl.: G06Q 10/087, B65G 1/04

(54) **CONTAINER TYPE VERIFICATION**

(71) Applicant: AutoStore Technology AS, 5578 Nedre Vats (NO)
(72) Inventor: JOSHI, Parth, 5578 Nedre Vats (NO); MÆHLE, Ole Alexander, 5578 Nedre Vats (NO); CARROZZO, Margherita, 5578 Nedre Vats (NO)
(74) Representative: Kilburn & Strode LLP

(57) **Abstract**

The disclosure relates to a controller (502) for container type verification in an automated storage and retrieval system. The controller is configured to receive container type information of a container (S100), wherein the container type information is determined by reading a container information unit (504) arranged in or on the container (508), determine a container type based on the received container type information (S105), and control the automated storage and retrieval system to perform an action based upon the determined container type (S110).

## Description

### TECHNICAL FIELD

The disclosure relates to verification. More particularly, it relates to container type verification in an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a block diagram of the components of a container type verification system;
Fig. 6 shows a flow chart of a process of verifying a container type;
Fig. 7 shows a flow chart of a process performed in determining whether a container type is a verified container type or a non-verified container type; and
Fig. 8 shows a flow chart of a process performed in verifying that a determined physical property type of a container matches an expected physical property type of the container.

### DETAILED DESCRIPTION

In overview, this disclosure relates to determining a type of a container and performing an action in response to determining the type. A controller can receive container type information of a container in the automated storage and retrieval system. The container type information can be determined by reading a container information unit arranged in or on the container with a container scanner. A container type can then be determined based on the received container type information. Then, the automated storage and retrieval system can be controlled to perform an action based upon the determined container type.

The automated storage and retrieval system can store a plurality of different types of container or bin at the same time within the system. Such different types of container can include different physical property types of contain (e.g., different sizes of container, containers of different weight-bearing capacities, etc.) as well as verified containers and non-verified containers, amongst others.

Predetermined data pertaining to a physical property type of container can be used to determine where to store a container. However, if this predetermined data is incorrect (e.g., if an operator has made an error at a data input stage, assigning a container as the wrong type), there is a risk of damage to containers and/or their contents and downtime of the automated storage and retrieval system, amongst other issues. By determining the container type based on container type information read from the container by a container scanner, this risk can be mitigated (as will be discussed in more detail), thereby improving system performance.

Likewise, non-verified containers (i.e., containers not supplied/approved by the manufacturer) may not be suitable for use in the automated storage and retrieval system, and their use can lead to damage to containers and/or their contents and downtime of the automated storage and retrieval system, amongst other issues. In determining whether the container is verified or non-verified by determining the container type based on container type information read from the container by a container scanner, the controller can control the automated storage and retrieval system to inhibit non-verified containers being inserted into the system (as will be discussed in more detail), thereby mitigating the aforementioned risks associated with non-verified containers, and improving system performance.

### Automated storage and retrieval system overview

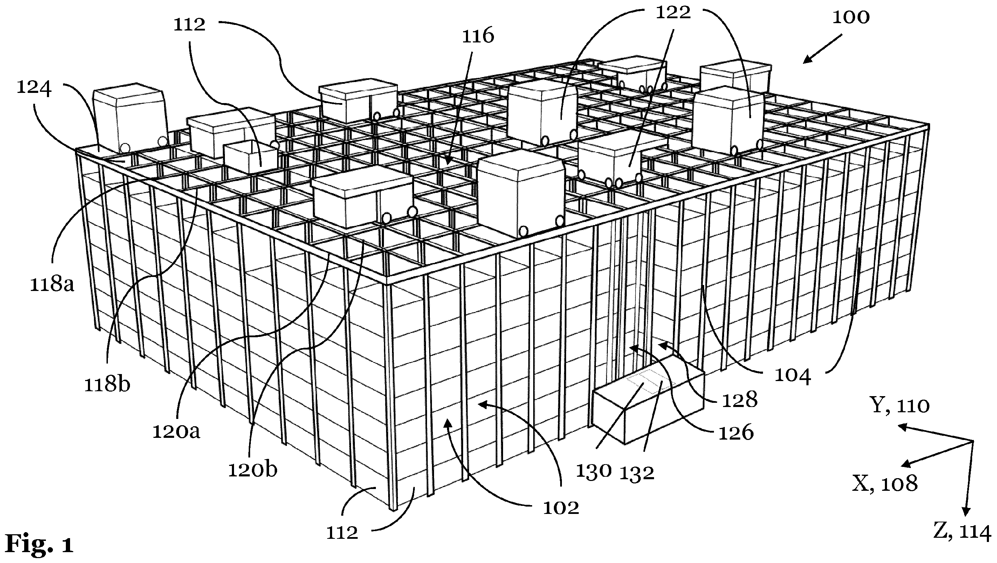

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (interchangeably referred to as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

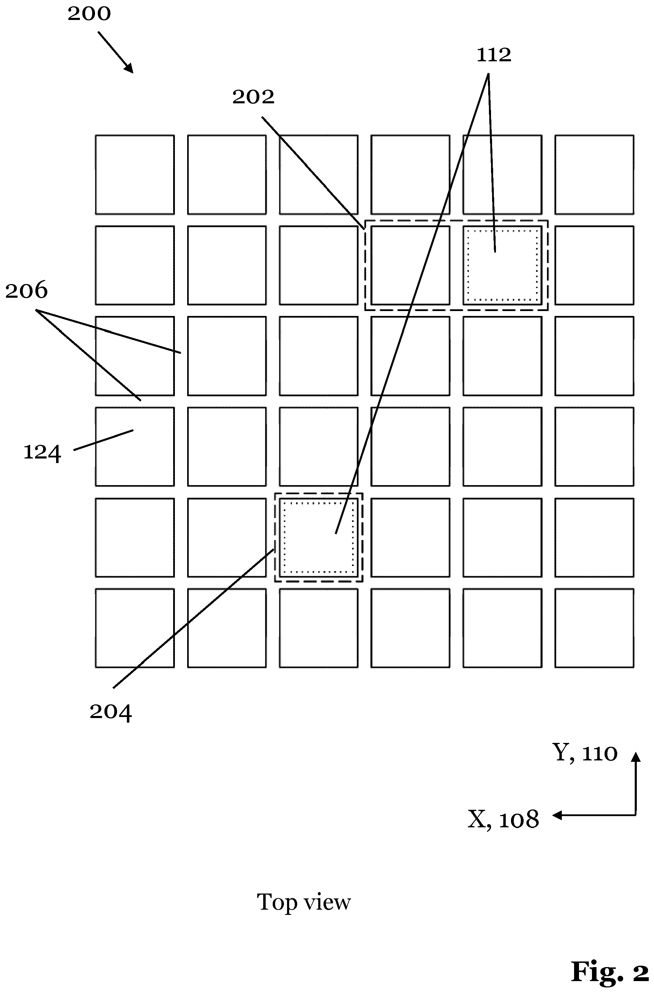

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

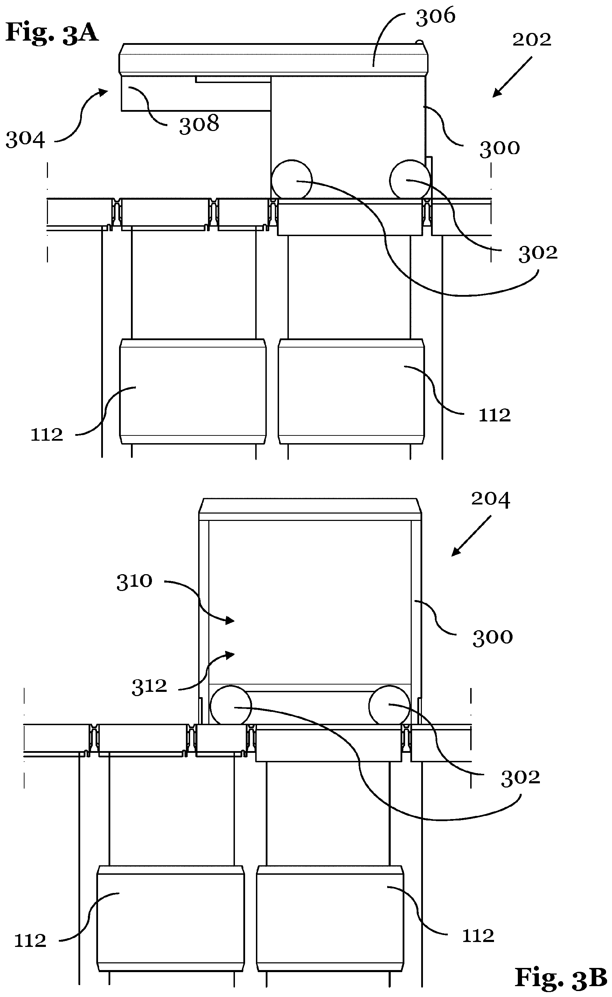

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

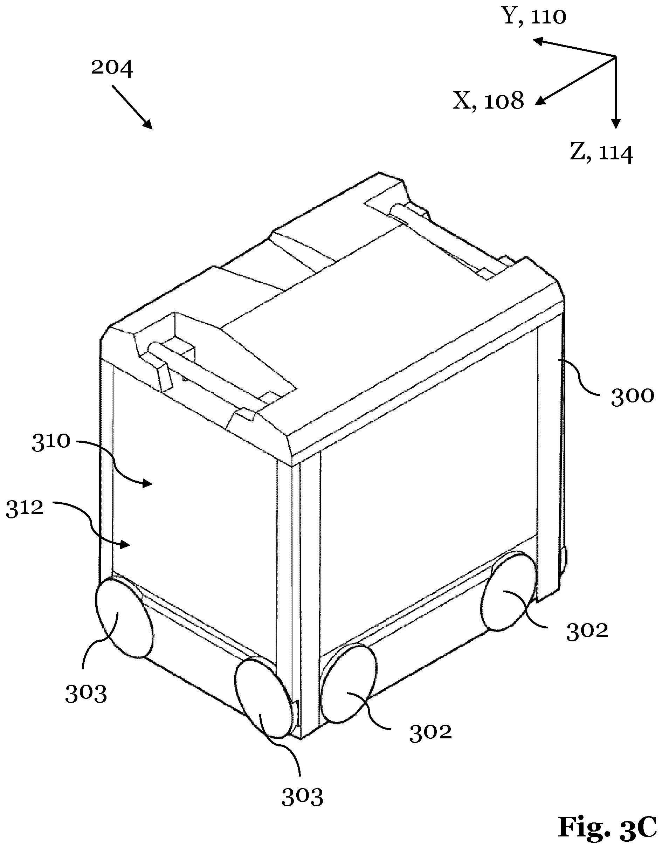

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

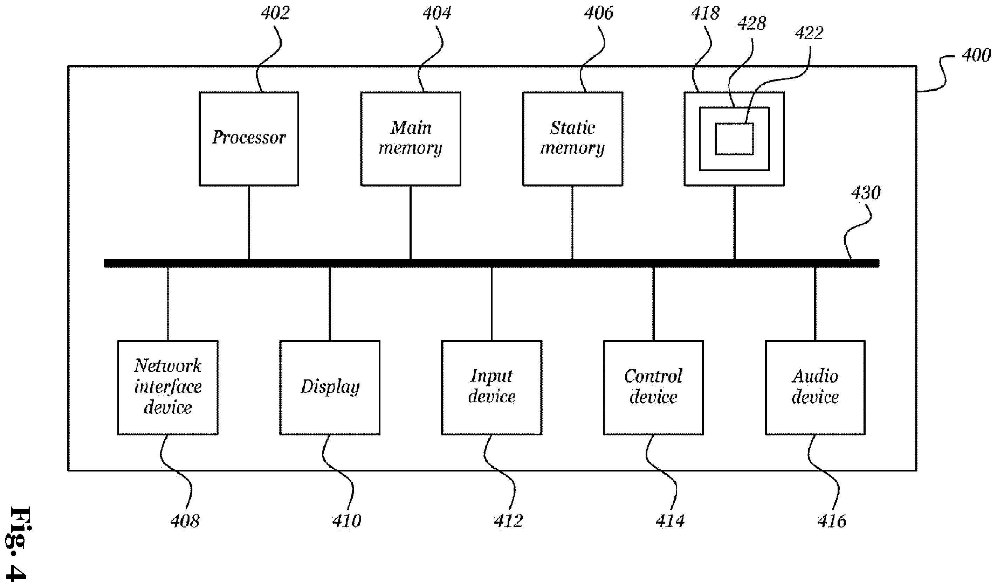

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Container Type Verification

The present disclosure provides processes for the verification of container types using container type information. Such verification reduces risks of damage to and/or failure of containers, stacks of containers, and the automated storage and retrieval system more generally. System downtime can therefore be reduced, system performance can be improved, as well as operator safety.

A controller can be provided for container type verification in an automated storage and retrieval system in which one or more container-handling robotic vehicles move.

The controller performs a verification process that can comprise the following steps. The controller can be configured to receive container type information of a container in the automated storage and retrieval system. The container type information can be determined by reading a container information unit arranged in or on the container. The container information unit can be read with a container scanner. The controller can be configured to determine a container type based on the received container type information. The controller can be configured to control the automated storage and retrieval system to perform an action based upon the determined container type.

In a first implementation of the verification process, determining the container type can comprise determining whether the container type is a verified container type or a non-verified container type.

This process can be triggered when a container is introduced into the automated storage and retrieval system.

In this first implementation of the verification process, the received container type information can comprise a container verification identifier or an indication that no container verification identifier is available.

The container verification identifier can be a serial number, identification number, code or the like.

The controller can be configured to compare the container verification identifier to one or more expected container verification identifiers. Expected container verification identifiers can be stored in computer-storage accessible by the controller.

An expected container verification identifier can be a container verification identifier of a container that is verified and permitted for use in the automated storage and retrieval system.

The controller can be configured to determine that the container type is a verified container type when the container verification identifier matches at least one expected container verification identifier of the one or more expected container verification identifiers.

The controller can be configured to determine that the container type is a non-verified container type when the container verification identifier does not match any expected container verification identifiers of the one or more expected container verification identifiers.

The controller can be configured to determine that the container type is a non-verified container type when no container verification identifier is available.

When the container type is determined as a verified container type, the action can comprise allowing the container to be used in the automated storage and retrieval system.

Allowing a container to be used in the automated storage and retrieval system can comprise allowing the container to be inserted into the system at a port.

Allowing a container to be used in the automated storage and retrieval system can comprise the controller instructing a container-handling robot to collect the container from the port.

When the container type is determined as a non-verified container type, the action can comprise inhibiting the container being used in the automated storage and retrieval system.

The inhibiting can comprise controlling a container-handling robotic vehicle to be inhibited from moving the container.

The inhibiting can comprise controlling a port of the automated storage and retrieval system to inhibit inserting of the container into the automated storage and retrieval system.

When the container type is determined as a non-verified container type, the action can (alternatively or additionally) comprise applying a flag to a record associated with the container in computer-storage accessible. The flag can indicate that the container is a non-verified container when the container type is determined as a non-verified container type. When a record associated with a container has the flag applied, an alert can be output. The alert can warn an operator that the container is a non-verified container. Alternatively or additionally, the alert can notify a service provider of the automated storage and retrieval system that an operator is using a non-verified container.

In a second implementation of the verification process, the automated storage and retrieval system can comprise at least two types of container having different physical property types.

The process can be triggered when a container is introduced into the automated storage and retrieval system. Alternatively or additionally, the process can be triggered when a container-handling robotic vehicle engages a container.

The received container type information can comprise an indicator of the physical property type of the container.

The received container type information can also comprise a unique identifier of the container.

The determining the container type can comprise determining the physical property type of the container based on the indicator of the physical property type of the container.

The physical property types of the containers can correspond to different container dimensions.

Alternatively or additionally, the physical property types of the containers can correspond to different maximum load weights that can be placed on top containers in a stack of containers.

The controller can be configured to compare the determined physical property type of the container to an expected physical property type of the container. The expected physical property type of the container can be stored in computer-storage accessible by the controller.

The computer-storage can store a datastore comprising records of an expected physical property type for each container in the automated storage and retrieval system, as well as the unique identifier of each container.

The controller can identify the record corresponding to the unique identifier of the container and compare the expected physical property type to the determined physical property type of the container.

The action can comprise updating the expected physical property type of the container to the determined physical property type of the container when the determined physical property type of the container does not match the expected physical property type of the container.

Alternatively or additionally, the action can comprise controlling a reconfiguration of a predetermined stacking arrangement of containers in the automated storage and retrieval system when the determined physical property type of the container does not match the expected physical property type of the container.

The reconfiguration can comprise selecting a second container stack to add the container to that is different to a first container stack to which the container was previously assigned.

The first container stack can be a container stack that comprises containers with a physical property type that does not match the determined physical property type of the container.

The second container stack can be a container stack that comprises containers with a physical property type that matches the determined physical property type of the container.

When the determined physical property type of the container does match the expected physical property type of the container, the controller can be configured to apply a verification flag to a record associated with the container indicating that the expected physical property type of the container is correct.

Alternatively/additionally, when the determined physical property type of the container does match the expected physical property type of the container, the action can comprise allowing the container to be used in the automated storage and retrieval system as previously intended.

The controller can be configured to perform either or both of the first implementation of the verification process and the second implementation of the verification process.

An automated storage and retrieval system comprising the controller is also provided.

The automated storage and retrieval system can comprise a container scanner configured to read the container information unit arranged in or on a container in the automated storage and retrieval system.

The automated storage and retrieval system can comprise a communication channel through which the container verification information is transmitted to the controller.

The controller can be a main controller of the automated storage and retrieval system that controls the movement of robotic vehicles (including the container-handling robotic vehicles), and the arrangement of the containers within the system.

The container scanner can be arranged in or on a container-handling robotic vehicle in the automated storage and retrieval system.

One, more than one, or all of the container-handling robotic vehicles in the automated storage and retrieval system can have container scanners as a component.

The container scanner can be communicatively coupled to an on-board control system of the container-handling robotic vehicle.

The container scanner can be physically arranged on/in a gripping device of the container-handling robotic vehicle. The container-handling robotic vehicle can lower the gripping device into a cell in the grid to read the container information unit of the container.

The container scanner can be physically arranged on/in a lifting device of the container-handling robotic vehicle. The container scanner can be brought into a position proximal to the container information unit, to read the container information unit, when the container-handling robotic vehicle engages the container.

The container scanner can be arranged on a main body of the container-handling robotic vehicle. When the container is lifted to a carrying position by the container-handling robotic vehicle, the container information unit can be physically proximal to the container scanner on the main body of the container-handling robotic vehicle such that the container scanner is capable of reading the container information unit.

Alternatively or additionally, the container scanner can be arranged in or on a port of the automated storage and retrieval system. The port can be configured for inserting a container into, and/or removing a container from, the automated storage and retrieval system.

One, more than one, or all of the ports in the automated storage and retrieval system can have container scanners as a component.

The container scanner can be communicatively coupled to the control system of the port.

The container scanner can be positioned so as to read the container information unit when the container is inserted into / removed from the port.

The container scanner can be arranged at either or both of the container-handling robotic vehicle(s) and the port(s).

The container information unit can be a machine-readable label.

The container information unit can be an RFID tag. The container scanner can be an RFID reader.

The container information unit can be an NFC tag. The container scanner can be an NFC reader.

The container information unit can be an optically-readable code. The container scanner can be an optical scanner.

The container information unit can be a QR code. The container scanner can be a QR code scanner.

The container information unit can be a barcode. The container scanner can be a barcode scanner.

The container information unit can store information about the type of the container. Containers can be of different types, including but not limited to verified containers and non-verified containers, different dimensions (such as sizes) of container, containers with different weight-bearing capacities for weights stacked thereon, and so forth.

A method is provided for container type verification in an automated storage and retrieval system in which one or more container-handling robotic vehicles move.

The method can comprise receiving container type information of a container in the automated storage and retrieval system. The container type information can be determined by reading a container information unit arranged in or on the container with a container scanner. The container type information can be received at a controller. The method can comprise determining a container type based on the received container type information. The determining can be performed by a controller. The method can comprise controlling the automated storage and retrieval system to perform an action based upon the determined container type. The controlling can be performed by a controller.

The method can also comprise steps to bring about any of the aforementioned features.

A computer-readable medium is provided with instructions stored thereon.

When executed by one or more processors of a controller of an automated storage and retrieval system in which one or more container-handling robotic vehicles move, the instructions can cause the controller to receive container type information of a container in the automated storage and retrieval system. The container type information can be determined by reading a container information unit arranged in or on the container with a container scanner. The instructions can also cause the controller to determine a container type based on the received container type information. The instructions can also cause the controller to control the automated storage and retrieval system to perform an action based upon the determined container type.

The computer-readable medium can also have instructions stored thereon to bring about any of the other aforementioned features.

The computer-readable medium can be a non-transitory computer-readable medium.

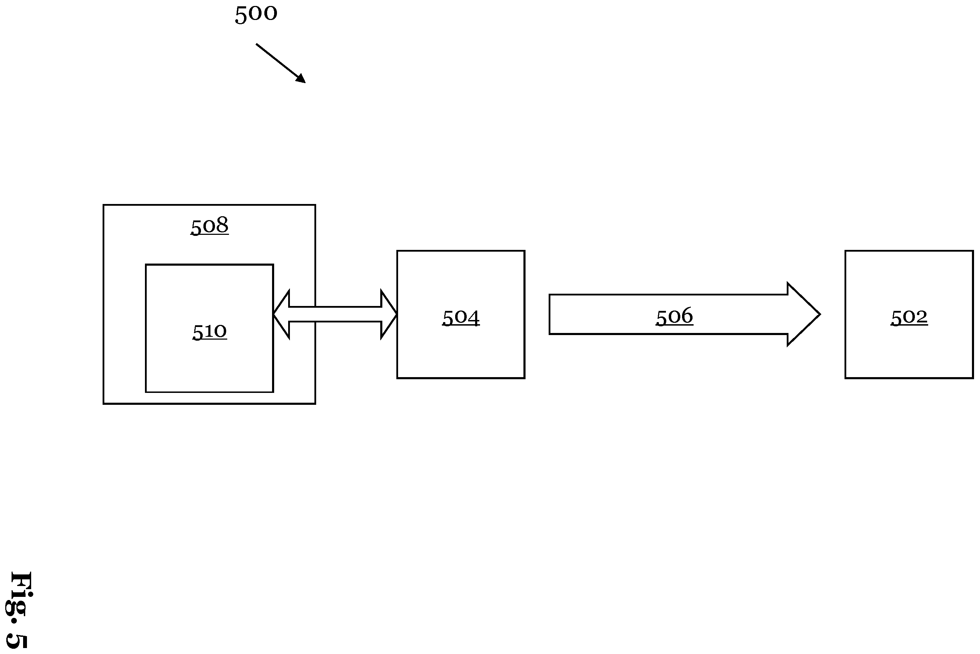

Turning to Fig. 5, Fig. 6, Fig. 7 and Fig. 8, specific implementations for verifying a container type are presented.

Fig. 5 is a block diagram of the components of a container type verification system 500. The container type verification system includes a controller 502 that is in communication with a container scanner 504 by a communication channel 506. The container scanner 504 reads a container information unit 510, with the container information unit 510 arranged at a container 508.

The controller 502 is the main controller of the automated storage and retrieval system (for example, the controller 502 is the processing system 400 as described with reference to Fig. 4), that controls the movement of robotic vehicles (including the container-handling robotic vehicles 122) in the system, and the arrangement of the containers 508 within the system.

The container information unit 510 is a component arranged in or on the container 510 that is readable by the container scanner 504. The container information unit 510 stores information about the type of the container 510. As will be discussed in more detail subsequently, containers 510 can be of different types such as verified containers and non-verified containers, different dimensions (e.g., sizes) of container, containers with different weight-bearing capacities for weights stacked thereon, and so forth.

While Fig. 5 shows a single container 508, it will be understood that the automated storage and retrieval system, and container type verification system 500 thereof, comprises a plurality of containers 508 with respective container information units 510.

The container scanner 504 is configured to scan the container information unit 510 to read information from the container information unit 510. While Fig. 5 shows a single container scanner 504, it will be understood that there can be more than one container scanner 504 in the container type verification system 500.

In a first arrangement, the container scanner 504 is a component at a container-handling robotic vehicle 122 in the automated storage and retrieval system (such as one of the container-handling robotic vehicles 122, 202, 204 described with reference to Figs. 1, 3A-3C). One, more than one, or all of the container-handling robotic vehicles 122 in the automated storage and retrieval system have container scanners 504 as a component. The container scanner 504 is communicatively coupled to the on-board control system of the container-handling robotic vehicle 122. In one manner, the container scanner 504 is physically arranged on/in the gripping device 308 of the container-handling robotic vehicle 122. The container-handling robotic vehicle 122 then lowers the gripping device 308 into a cell in the grid to read the container information unit 510 of the container 508. In another manner, the container scanner 504 is physically arranged on/in the lifting device 304, 312 of the container-handling robotic vehicle 122. The container scanner 504 is then brought into a position proximal to the container information unit 510, and reads the container information unit 510, when the container-handling robotic vehicle 122 engages the container 508. In another manner, the container scanner 504 is arranged on a main body of the container-handling robotic vehicle 122. When the container 508 is lifted to a carrying position by the container-handling robotic vehicle 122, the container information unit 510 is physically proximal to the container scanner 504 on the main body of the container-handling robotic vehicle 122 such that the container scanner 504 is capable of reading the container information unit 510.

In a second arrangement, the container scanner 504 is a component at the port 130, 132 of the automated storage and retrieval system. One, more than one, or all of the ports 130, 132 in the automated storage and retrieval system have container scanners 504 as a component. The container scanner 504 is communicatively coupled to the control system of the port 130, 132. The container scanner 504 can be positioned so as to read the container information unit 510 when the container is inserted into / removed from the port 130, 132.

The container type verification system 500 can be configured with the container scanner 504 arranged in either the first arrangement (container scanner 504 at container-handling robotic vehicle/vehicles 122) or the second arrangement (container scanner 504 at the port/ports 130, 132), or a combination of the first arrangement and the second arrangement.

The container information unit 510 is configured as a machine-readable tag and the container scanner 504 is configured to read the tag. In a first example, this is an RF tag (e.g., an RFID tag or an NFC tag), and the container scanner 504 is an RF reader (e.g., an RFID reader or an NFC reader). In a second example, the container information unit 510 is an optical tag, such as a barcode or QR code, and the container scanner 504 is an optical reader.

The communication channel 506 is configured for sending messages or signals between the container scanner 504 and the controller 502. The communication channel 506 can be realised in several ways. In an example, the communication channel 506 is a wireless connection, such as a connection using an IEEE 802 type wireless network, an LTE network, or the like. In such cases, a first transceiver is connected to the container scanner 504 (e.g., as a component of the container-handling robotic vehicle 122 or the port 130, 132 to which the container scanner 504 is also a component), and a second transceiver is connected to the controller 502 to connect the container scanner 504 and the controller 502 to the communication channel 506 and allow communication therebetween. When the container scanner 504 is arranged at a static system component (e.g., a port 130, 132) the communication channel 506 can be a wired connection, such as Ethernet or the like.

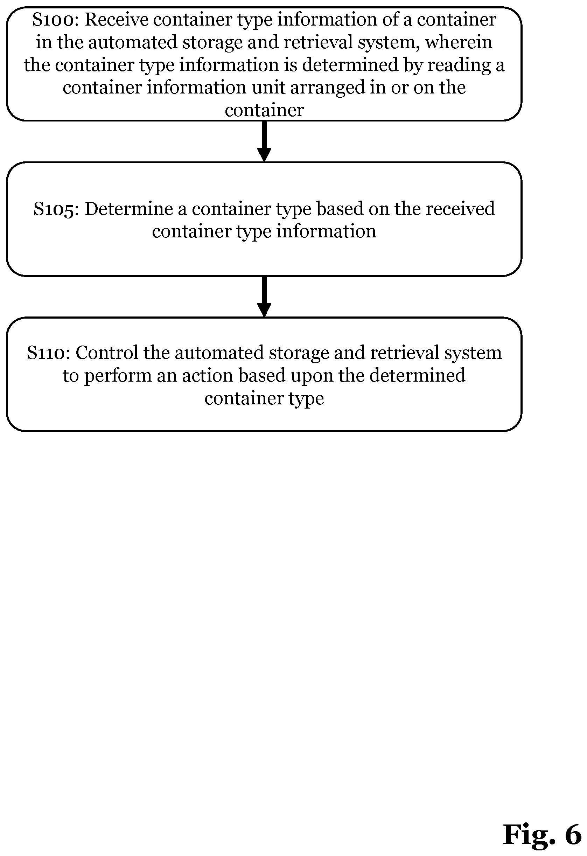

Fig. 6 is a flow chart of a process performed by the controller 502 in verifying a container type with the container type verification system 500 of Fig. 5.

As discussed with reference to Fig. 5 (and not repeated in detail for brevity), the container type information of a container 508 in the automated storage and retrieval system is determined by reading the container information unit 510 with the container scanner 504. The container type information is then transmitted from the container scanner 504 to the controller 502 using the communication channel 506.

At step S100, the controller 502 receives the container type information of the container 508 in the automated storage and retrieval system.

At step S105, the controller 502 determines a container type based on the received container type information.

At step S110, the controller 502 controls the automated storage and retrieval system to perform an action based upon the determined container type.

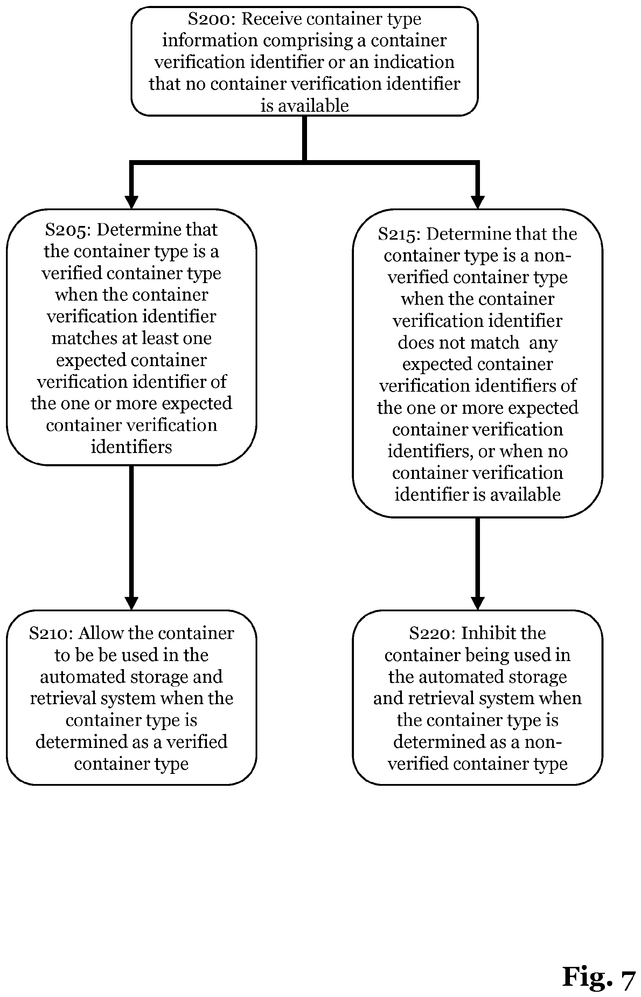

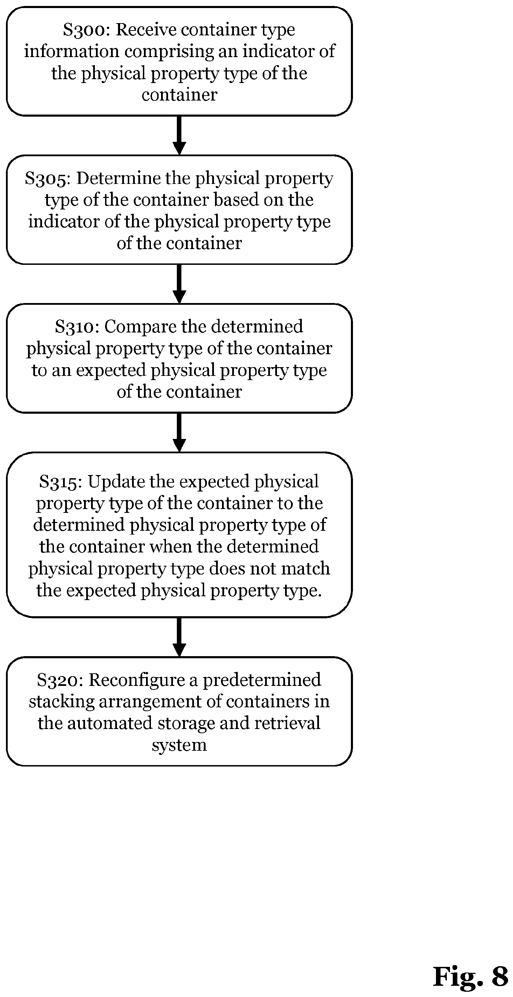

Fig. 7 and Fig. 8 provide specific implementations of the more general process of Fig. 6. The processor and automated storage and retrieval system are capable of being configured to perform one or both of the processes described with reference to Fig. 7 and Fig. 8.

Turning to Fig. 7, Fig. 7 is a flow chart of a process performed by the controller 502 in determining whether the container type is a verified container type or a non-verified container type, and performing an action to allow or inhibit the container to be inserted into the automated storage and retrieval system.

In this process, verified containers in the automated storage and retrieval system have container information units 510 that store a valid container verification identifier. In an example, a verified container is a container 508 supplied by the manufacturer of the automated storage and retrieval system for use in the specific automated storage and retrieval system. In another example, a verified container is a container 508 that is supplied by a third-party (i.e., not the manufacturer of the automated storage and retrieval system) that has been verified by the manufacturer of the automated storage and retrieval system for use in the specific automated storage and retrieval system.

Non-verified containers do not have container information units 510, or have container information units 510 that do not store a valid container verification identifier. In an example, a non-verified container is a container that is supplied by a third-party (i.e., not the manufacturer of the automated storage and retrieval system) and has not been verified by the manufacturer of the automated storage and retrieval system for use in the specific automated storage and retrieval system.

Non-verified containers (e.g., from a third party supplier, rather than the supplier of the automated storage and retrieval system) may not be appropriately shaped or dimensioned for use in the automated storage and retrieval system, or may not be able to carry a sufficient weight of contents therein, or may not have suitable load-bearing capacity for the weight of other containers stacked thereon. This can lead to failure of the container(s) and/or damage to their contents, and downtime of the automated storage and retrieval system, amongst other issues.

The process of Fig. 7 addresses and mitigates such issues.

The process of Fig. 7 is triggered when a container 508 is introduced into the automated storage and retrieval system. In a first example, the container scanner 504 is arranged at the port 130, 132, and reads the container information unit 510 when the container 508 is inserted into the port 130, 132. In a second example, the container scanner 504 is arranged at a container-handling robotic vehicle 122 that collects the container 508 from the port 130, 132, and reads the container information unit 510 when the container-handling robotic vehicle 122 engages the container 508.

The container scanner 504 is configured to read a container verification identifier from the container information unit 510 of the container 508. Container type information is then sent to the controller 502.

When the container scanner 504 reads a container verification identifier from the container information unit 510 of the container 508, the container type information that is sent to the controller 502 comprises this container verification identifier.

The container verification identifier is a serial number, identification number, code or the like. In an example, containers 508 have different container verification identifiers. In another example, verified containers all have the same container verification identifier.

When the container scanner 504 cannot read a container verification identifier because there is no container verification identifier available (e.g., when there is no container information unit 510 on the container, or because the container information unit 510 does not have a container verification identifier stored thereon), the container type information that is sent to the controller 502 comprises an indication that no container verification identifier is available.

The container type information is transmitted from the container scanner 504 to the controller 502 using the communication channel 506.

At step S200, the controller 502 receives the container type information.

The controller 502 processes the received container type information and determines whether a container verification identifier is included, or whether an indication that no container verification identifier is available is included in the container type information. When the container type information comprises a container verification identifier, the controller 502 proceeds to compare the container verification identifier to one or more expected container verification identifiers stored in computer-storage accessible by the controller 502.

The controller 502 accesses a datastore in the computer-storage which contains the one or more expected container verification identifiers. An expected container verification identifier is the container verification identifier of a container that is verified and permitted for use in the automated storage and retrieval system.

In the example in which containers 508 in the automated storage and retrieval system have different container verification identifiers, a predetermined list of a plurality of expected container identifiers is stored in the datastore. The controller 502 compares the received container verification identifier against this list.

In the example in which verified containers all have the same container verification identifier, the expected container verification identifier stored in the datastore is this single, predetermined expected container verification identifier. The controller 502 compares the received container verification identifier against this expected container verification identifier.

When the controller 502 determines that the received container verification identifier matches at least one expected container verification identifier of the one or more expected container verification identifiers, the process continues to step S205.

When the controller 502 determines that the received container verification identifier does not match at least one expected container verification identifier of the one or more expected container verification identifiers, or when container type information comprises the indication that no container verification identifier is available, the process continues to step S215.

At step S205, the controller 502 determines that the container type is a verified container type. This determination is in response to determining that the received container verification identifier matches at least one expected container verification identifier of the one or more expected container verification identifiers.

Following step S205, the process continues to step S210.

At step S210, the controller 502 controls the automated storage and retrieval system to perform an action based on the determination that the container type is the verified container type. This action comprises allowing the container 508 to be used in the automated storage and retrieval system.

That is, because the container 508 is determined to be a verified container, the container is permitted to be used in the automated storage and retrieval system.

When allowing the container 508 to be used in the automated storage and retrieval system, the controller 502 allows the container 508 to be inserted into the system at the port 130, 132. The controller 502 also instructs a container-handling robot to collect the container 508 from the port 130, 132 and then transport the container 508 to the storage location where it is then stored. In other words, the container 508 is not restricted from insertion to the automated storage and retrieval system based on the container verification identifier of the container 508.

At step S215, the controller 502 determines that the container type is a non-verified container type. This determination is in response to determining that the received container verification identifier does not match at least one expected container verification identifier of the one or more expected container verification identifiers, or in response to determining that the container type information comprises the indication that no container verification identifier is available.

Following step S215, the process continues to step S220.

At step S220, the controller 502 controls the automated storage and retrieval system to perform an action based on the determination that the container type is the non-verified container type. This action comprises the controller 502 inhibiting the container being used in the automated storage and retrieval system. That is, because the container is determined to be a non-verified container, the container is not permitted to be used in the automated storage and retrieval system.

In a first manner, the controller 502 inhibiting the container being used in the automated storage and retrieval system is brought about through container-handling robotic vehicle control.

The controller 502 is configured to control the automated storage and retrieval system to inhibit the container 508 being used in the automated storage and retrieval system by controlling a container-handling robotic vehicle 122 to be inhibited from moving the container 508. Alternatively or additionally, the controller 502 is configured to inhibit the container 508 being used in the automated storage and retrieval system through controlling the container-handling robotic vehicle 122 in one or more of the following ways. The controller 502 prevents a container-handling robotic vehicle 122 from collecting the non-verified container from a port 130, 132 (e.g., by specifically not instructing a container-handling robotic vehicle 122 to collect the non-verified container). The controller 502 prevents a container-handling robotic vehicle 122 traversing the automated storage and retrieval system with the non-verified container by instructing the container-handling robotic vehicle 122 to not transport the container. The controller 502 controls a container-handling robotic vehicle 122 to return the non-verified container to a port 130, 132 for removal from the automated storage and retrieval system.

In a second manner (alternatively or additionally to the first manner), the controller 502 inhibiting the container being used in the automated storage and retrieval system is brought about through port control.

The controller 502 is configured to control the automated storage and retrieval system to inhibit the container 508 being used in the automated storage and retrieval system by controlling a port 130, 132 of the automated storage and retrieval system to inhibit inserting of the container 508 into the automated storage and retrieval system. In an example, the controller 502 prevents a door(s) of the port 130, 132 from opening, to inhibit the non-verified container from being inserted. In another example, alternatively or additionally, the controller 502 prevents a conveyer in the port 130, 132 from transporting the non-verified container into the automated storage and retrieval system.

By inhibiting non-verified containers from being inserted into the automated storage and retrieval system, risks such as those associated with non-verified containers not being appropriately shaped or dimensioned for use the automated storage and retrieval system, or not having a suitable weight carrying capacity, or not having a suitable load-bearing capacity for the weight of other containers stacked thereon, are obviated. This avoids potential damage to container(s) and/or their contents, and avoids downtime of the automated storage and retrieval system.

Alternatively or additionally, when the controller 502 determines that the container type is a non-verified container type, the controller 502 controls the automated storage and retrieval system to perform an action that comprises the controller 502 applying a flag to a record associated with the container 508 in computer-storage accessible by the controller 502. The flag indicates that the container 508 is a non-verified container when the container type is determined as a non-verified container type.

When a record associated with a container has the flag applied, an alert is output. Such an alert is an audible/visual/text output.

In a first example, the alert is output to warn an operator that the container 508 is a non-verified container.

In a second example, the alert is output to notify a service provider of the automated storage and retrieval system that an operator is using a non-verified container. Such an alert can trigger the service provider to perform further investigations in to the usage of the automated storage and retrieval system by the operator.

Outputting such an alert makes the operator / service provider aware of the presence of the non-verified container, thereby helping to obviate risks such as those associated with non-verified containers not be appropriately shaped or dimensioned for use the automated storage and retrieval system, or not having a suitable weight carrying capacity, or not having suitable load-bearing capacity for the weight of other containers stacked thereon. This avoids potential damage to container(s) and/or damage to their contents, and avoids downtime of the automated storage and retrieval system.

Turning to Fig. 8, Fig. 8 is a flow chart of a process performed by the controller 502 in an automated storage and retrieval system that stores at least two types of container 508. The at least two types of container 508 have different physical property types. In this process, the controller 502 verifies that a determined physical property type of a container 508 matches an expected physical property type of the container 508.

The physical property types correspond to different container dimensions and/or different weight-bearing limits (a weight-bearing limit being the amount of weight that can be stacked on the container 508, i.e., due to other containers 508 stacked thereon in a container stack). That is, the weight-bearing limit of a container 508 determines how many containers 508 (i.e., how much weight) can be stacked on top of the container 508. If the weight-bearing limit is exceeded, the container 508 could become damaged or collapse. If containers 508 of different sizes are combined in a container stack, containers 508 could become damaged, and/or the stack could be destabilised and risk collapse.

When a new container is introduced to the automated storage and retrieval system, metadata is associated with the container 508 in a record for the container 508 in a datastore as one or more labels indicating the physical property type of the container 508. However, there is a risk of operator error in this labelling. For example, a small-sized container could be incorrectly labelled as a regular-sized container, or a container with a low weight-bearing limit could be incorrectly labelled as a container with a high weight-bearing limit. If this metadata is incorrectly labelled, there is a risk of damage to the container 508, the container stack in which the container 508 is stored, and/or the automated storage and retrieval system more generally, because the container could be stored in an inappropriate stack.

For example, a small-sized container could be added to a stack of regular-sized containers and destabilise the stack. Likewise, a low weight-bearing limit container could have too much weight stacked thereon leading to damage to the container 508. This can lead to failure of the container(s) 508 and/or damage to their contents, as well as downtime of the automated storage and retrieval system, amongst other issues.

The process of Fig. 8 addresses and mitigates such issues.

The process of Fig. 8 is triggered when a container 508 is introduced into the automated storage and retrieval system. Alternatively or additionally, the process is triggered when a container-handling robotic vehicle 122 engages a container 508.

In a first example, the container scanner 504 is arranged at the port 130, 132, and reads the container information unit 510 when the container 508 is inserted into the port 130, 132. In a second example, the container scanner 504 is arranged at a container-handling robotic vehicle 122 that collects the container 508 from the port 130, 132, and reads the container information unit 510 when the container-handling robotic vehicle 122 engages the container 508.

The container scanner 504 is configured to read a physical property type indicator from the container information unit 510 of the container 508. The container scanner 504 also reads a unique identifier of the container 508 from the container information unit 510; each container 508 in the automated storage and retrieval system has a different unique identifier.

The container type information, comprising the physical property type indicator and the unique identifier of the container 508, is then transmitted from the container scanner 504 to the controller 502 using the communication channel 506.

At step S300, the controller 502 receives the container type information.

The controller 502 processes the received container type information to determine the physical property type indicator and the unique identifier of the container 508.

At step S305, the controller 502 determines the physical property type of the container 508 based on the physical property type indicator.

The different physical property types of the containers 508 correspond to at least one of different container dimensions (e.g., small-size container, regular-size container, etc) or different maximum weight limits that can be loaded on top of the container 508 in a stack of containers (e.g., high weight-bearing limit, low weight-bearing limit etc). The physical property type indicator defines the physical property type of the container 508. For example, this is set during manufacturing of the container 508, or commissioning of the container 508 in an automated storage and retrieval system, such that the container information unit 510 is set to carry the physical property type indicator corresponding to the type of container (e.g., a small-sized container has a container information unit 510 set to carry a small-sized container indicator).

At step S310, the controller 502 compares the determined physical property type of the container 508 to an expected physical property type of the container.

The controller 502 accesses a datastore of expected physical property types of container. This datastore is stored in computer-storage accessible by the controller 502. The datastore comprises records of the expected physical property type for each container as well as the unique identifier of each container.

The controller 502 identifies the record corresponding to the received unique identifier of the container 508 and compares the expected physical property type to the determined physical property type of the container 508.

The controller 502 controls the automated storage and retrieval system to perform an action based upon the determined container type.

When the determined physical property type of the container 508 matches the expected physical property type of the container 508, the action comprises the controller 502 verifying that the expected physical property type of the container 508 is correct in the datastore. For example, the record is updated with a flag indicating that the container 508 type is verified as correct.

At step S315, when the determined physical property type of the container 508 does not match the expected physical property type of the container 508, the action comprises updating the expected physical property type of the container 508 to the determined physical property type of the container 508 in the datastore. That is, the record for the container 508 is updated to remove the incorrect expected physical property type of the container 508, and apply the correct physical property type of the container 508 that has been determined from the received container type information read from the container information unit 510.

At step S320, also when the determined physical property type of the container 508 does not match the expected physical property type of the container 508, the action further comprises the controller 502 controlling a reconfiguration of a predetermined stacking arrangement of containers in the automated storage and retrieval system.

This reconfiguration comprises selecting a container stack to add the container 508 to that is different to a predetermined container stack to which the container 508 was previously assigned.

The container 508 may have been assigned to be stored in a stacked column of containers based on the expected physical property type of the container 508. However, when this expected physical property type is determined to be incorrect, and the expected physical property type of the container 508 is updated to the determined physical property type of the container 508, a different stack is determined for the container 508 to be stored in that corresponds to the determined physical property type of the container 508.

That is, the original intended container stack is a container stack that comprises containers with a physical property type that does not match the determined physical property type of the container. The different container stack can be a container stack that comprises containers with a physical property type that matches the determined physical property type of the container.

For example, when the expected physical property type of the container 508 was a small-sized container, the container 508 may have been assigned to a container stack containing only small-sized containers. However, when it is then determined that the expected physical property type of the container 508 was incorrect and the container 508 is actually a regular-sized container, a new container stack is selected for the container 508 to be stored in, such as a container stack of regular-sized containers.

In a similar example, when the expected physical property type of container 508 was a high weight-bearing limit container, the container 508 may have been assigned to be stored in a container stack of high weight-bearing limit containers. However, when it is then determined that the expected physical property type of the container 508 was incorrect and the container 508 is actually a low weight-bearing capacity container, a new container stack is selected for the container 508 to be stored in, such as a container stack of low weight-bearing capacity containers.

In this way, a two-step check of the physical property type of the container 508 is brought about. In the first step, the container type is set in the datastore (i.e., setting expected physical property type of the container), by an operator, before/at the first insertion of the container 508 into the automated storage and retrieval system. Then, in the second step of the two-step check, the expected physical property type is verified against the physical property type indicator stored in the container information unit 510 (i.e., the determined physical property type). This reduces the risk of operator error leading to an incorrect record of the physical property type of the container 508 in the datastore. This obviates risk of failure of the container or system due to a wrong indication of physical property type, and thereby avoids potential failure of the container(s) and/or damage to their contents, destabilising container stacks, and downtime of the automated storage and retrieval system.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A controller for container type verification in an automated storage and retrieval system in which one or more container-handling robotic vehicles move, wherein the controller is configured to:
receive container type information of a container in the automated storage and retrieval system, wherein the container type information is determined by reading a container information unit arranged in or on the container with a container scanner;
determine a container type based on the received container type information; and
control the automated storage and retrieval system to perform an action based upon the determined container type.

2. The controller of claim 1, wherein determining the container type comprises determining whether the container type is a verified container type or a non-verified container type.

3. The controller of claim 2, wherein the action comprises allowing the container to be used in the automated storage and retrieval system when the container type is determined as a verified container type; and
wherein the action comprises inhibiting the container being used in the automated storage and retrieval system when the container type is determined as a non-verified container type; and/or
wherein the action comprises applying a flag to a record associated with the container in computer-storage accessible by the controller, wherein the flag indicates that the container is a non-verified container, when the container type is determined as a non-verified container type.

4. The controller of claim 3, wherein the inhibiting comprises:
controlling a container-handling robotic vehicle to be inhibited from moving the container; and/or
controlling a port of the automated storage and retrieval system to inhibit inserting of the container into the automated storage and retrieval system.

5. The controller of any one of claims 2 to 4, wherein the received container type information comprises a container verification identifier or an indication that no container verification identifier is available.

6. The controller of claim 5, wherein the controller is configured to compare the container verification identifier to one or more expected container verification identifiers stored in computer-storage accessible by the controller; and the controller is further configured to:
determine that the container type is a verified container type when the container verification identifier matches at least one expected container verification identifier of the one or more expected container verification identifiers; and
determine that the container type is a non-verified container type when the container verification identifier does not match any expected container verification identifiers of the one or more expected container verification identifiers, or when no container verification identifier is available.

7. The controller of claim 1, wherein the automated storage and retrieval system comprises at least two types of container, the at least two types of container having different physical property types; and
wherein the received container type information comprises an indicator of the physical property type of the container, and determining the container type comprises determining the physical property type of the container based on the indicator of the physical property type of the container.

8. The controller of claim 7, wherein the different physical property types of the containers correspond to at least one of different container dimensions or different maximum load weights that can be placed on top of containers in a stack of containers.

9. The controller of claim 7 or claim 8, wherein the controller is configured to compare the determined physical property type of the container to an expected physical property type of the container, wherein the expected physical property type of the container is stored in computer-storage accessible by the controller; and
the action comprises updating the expected physical property type of the container to the determined physical property type of the container when the determined physical property type of the container does not match the expected physical property type of the container.

10. The controller of claim 9, wherein the action further comprises controlling a reconfiguration of a predetermined stacking arrangement of containers in the automated storage and retrieval system when the determined physical property type of the container does not match the expected physical property type of the container.

11. The controller of claim 10, wherein the reconfiguration comprises selecting a second container stack to add the container to that is different to a first container stack to which the container was previously assigned.

12. An automated storage and retrieval system comprising the controller of any preceding claim, and further comprising:
a container scanner configured to read the container information unit arranged in or on a container in the automated storage and retrieval system; and
a communication channel through which the container verification information is transmitted to the controller;
wherein the container scanner is arranged in or on a container-handling robotic vehicle in the automated storage and retrieval system; and/or
wherein the container scanner is arranged in or on a port of the automated storage and retrieval system, wherein the port is configured for inserting a container into, and/or removing a container from, the automated storage and retrieval system.

13. The automated storage and retrieval system of claim 12, wherein:
the container information unit is an RFID tag and the container scanner is an RFID reader; or
the container information unit is an NFC tag and the container scanner is an NFC reader; or
the container information unit is a QR code and the container scanner is a QR code scanner; or
the container information unit is a barcode and the container scanner is a barcode scanner.

14. A method for container type verification in an automated storage and retrieval system in which one or more container-handling robotic vehicles move, the method comprising:
receiving, at a controller, container type information of a container in the automated storage and retrieval system, wherein the container type information is determined by reading a container information unit arranged in or on the container with a container scanner;
determining, by the controller, a container type based on the received container type information; and
controlling, by the controller, the automated storage and retrieval system to perform an action based upon the determined container type.

15. A computer-readable medium with instructions stored thereon which, when executed by one or more processors of a controller of an automated storage and retrieval system in which one or more container-handling robotic vehicles move, cause the controller to:
receive container type information of a container in the automated storage and retrieval system, wherein the container type information is determined by reading a container information unit arranged in or on the container with a container scanner;
determine a container type based on the received container type information; and
controlling the automated storage and retrieval system to perform an action based upon the determined container type.
